# EUROPÄISCHE PATENTSCHRIFT

(11) **EP 1 241 031 B1**
(45) Veröffentlichungstag und Bekanntmachung des Hinweises auf die Patenterteilung: **23.11.2005**
(21) Anmeldenummer: 02000831.4
(22) Anmeldetag: 15.01.2002
(51) Int. Cl.: B60G 21/073, B60G 21/10, B60G 17/04

(54) **Hydropneumatische niveaugeregelte Achsfederung an Fahrzeugen insbesondere für vollgefederte Fahrzeuge**
Hydropneumatic suspension with levelling for vehicles, especially for completely suspended vehicles
Suspension hydropneumatique à réglage d'assiette pour véhicules, notamment pour véhicules totalement suspendus

(30) Priorität: 12.03.2001 DE 10112082
(43) Veröffentlichungstag der Anmeldung: 18.09.2002
(73) Patentinhaber: Carl Freudenberg KG, 69469 Weinheim (DE)
(72) Erfinder: Brandenburger , Walter, 41470 Neuss (DE)

(56) Entgegenhaltungen:
- EP-A- 0 730 988
- EP-A- 0 783 984
- DE-A- 3 301 847
- DE-A- 3 427 508
- FR-A- 1 301 331

## Beschreibung

Die Erfindung befasst sich mit der Achsfederung von Fahrzeugen, insbesondere von Fahrzeugen mit großen Achslastspreizungen, wie sie beispielsweise bei Schleppern in der Landwirtschaft gegeben ist. Das Einsatzgebiet dieser Fahrzeuge ist sehr vielfältig. So wird gewünscht, dass sie auf ausgebauten Strassen größere Entfernungen sehr schnell zurücklegen können. Sie sollen also mit hoher Geschwindigkeit sicher und komfortabel fahren und eine hierfür angepasste Federung aufweisen. Andererseits sollen sie in schwierigem Gelände einsetzbar sein, mit einer guten Wankstabilität bei guter Lastverteilung auf den Rädern zur optimalen Ausnutzung der Schlepperleistung und zur Reduzierung der Bodenaufstandskräfte.

### Stand der Technik

Bisher gängige Ausführungen sehen vor, den Schlepper beziehungsweise Traktor so auszubilden, dass eine stabile Dreipunktabstützung entsteht. Dabei ist die Hinterachse, die über die Abstützung der Räder eine Zweipunktabstützung bildet, in Kombination mit einer pendelnden Vorderachse, die in Achsmitte den dritten Stützpunkt darstellt, starr ausgeführt.

Das Dreipunktprinzip mit Starrachse ermöglicht im Feld sehr gute Betriebsbedingungen mit guter Wankstabilität. Bei Straßenfahrt sind jedoch Fahrleistungen und Fahrkomfort durch eine Starrachse eingeschränkt. Weiterhin zeigt DE-A-3 301 847 eine Achsfederung nach dem Oberbegriff des Anspruchs 2.

### Darstellung der Erfindung

Der Erfindung liegt die Aufgabe zugrunde, eine Federung zu schaffen, die für Schlepper bei Straßenfahrt höhere Fahrgeschwindigkeiten mit mehr Sicherheit und Fahrkomfort zulässt ohne Einschränkung des im Feld bewährten Fahrverhaltens der Dreipunktabstützung.

Die Lösung der gestellten Aufgabe erfolgt bei einer hydropneumatischen, niveaugeregelten Federung, insbesondere bei einer Vollfederung an Fahrzeugen mit großen Achslastspreizungen mit je zwei doppelt wirkenden hydraulischen Federzylindern an Vorder- und Hinterachse, deren Zylinderräume im Speicherverbund einen ersten Federkreis und deren kolbenseitige Ringräume in einem weiteren Speicherverbund einen zweiten Federkreis bilden, erfindungsgemäß dadurch, dass die Achsfederung für die Vorder- und Hinterachse als umschaltbare Doppelfunktionsachsfederung gebildet ist, so dass jede Achse sowohl als Pendelachse (im Querverbund) als auch als Stabilisierungsachse (im Kreuzverbund) einschaltbar ist. Die Achsfederungen werden folglich so ausgestaltet, dass sie je nach Bedarf einmal pendelnd oder stabilisierend wirksam sind, das heißt auch die Hinterradachse ist als Pendelachse schaltbar und die Vorderradachse als Stabilisierungsachse. Bei einer solchen Ausbildung der Schlepperachsen kann in herkömmlicher Weise für die Straßenfahrt oder Feldarbeit die Hinterradachse als Stabilisierungsachse geschaltet sein, während die Vorderachse als Pendelachse vorliegt. Hierbei kann gegebenenfalls für die Feldarbeit die Federung der Stabilisierungsachse blockiert werden, was zur Folge hat, dass die Stützpunkte für den Schlepperaufbau weiter nach außen verlegt werden, so dass die Wankstabilität einer Starrachse erreicht wird.

Wenn die Vorderachse bei Frontladearbeiten mit sehr hohem Gewicht belastet ist, ist es wünschenswert, dass die Vorderachse stabilisiert wird. Bei Straßenfahrten ist es bei einigen Belastungsfällen zwecks Verstärkung der Wankstabilisierung günstiger, Vorder- und Hinterachse gleichzeitig als stabilisierende Achse wirken zu lassen. Dabei ist eine uneingeschränkte Parallelfederung an beiden Achsen gegeben jedoch mit einer etwas ungünstigeren Lastverteilung als bei einer reinen Dreipunktlagerung. In der weiteren Ausgestaltung der Erfindung ist vorgesehen, dass bei großen Lastdifferenzen zwischen den Achsen durch Schaltung einer Achse als Pendelachse und der Anderen als Stabilisierungsachse eine Dreipunktlagerung gegeben ist. Der bevorzugte Fall sieht vor, dass die Achse mit der niedrigen Belastung auf Pendelfunktion geschaltet ist und die Achse mit der hohen Belastung die Stabilisierungsfunktion erhält.

Beim wechselseitigen Umschalten der Achsfunktionen an Vorder- und Hinterachse ist zur Vermeidung von Seitenneigung im Übergang kurzzeitig entweder die Federung mindestens einer Achse blockiert oder beide Achsen auf Stabilisierungsfunktion geschaltet. Ein Wechsel der Achsfunktion kann nur bei einer Achslast erfolgen, bei der die Zylinder- und Ringraumdrücke nahezu gleiches Druckniveau haben, damit problemlos ohne störende Niveauveränderung Druck- und Speicherverbindungen unter Druck geändert werden können. Bei gängigen Schleppertypen sind die Konstruktionsmaße der Federzylinder so abgestimmt, dass das Umschaltdruckniveau beispielsweise bei ca. 75 bar liegt. Dabei wird der Ringraumdruck durch ein Druckregelventil geregelt und der Druck im Zylinderraum der Federspeicher durch die Achsbelastung bestimmt.

Bei Pendelfunktion im Querverbund stützt sich die Achslast auf den Zylinderflächen ab, bei Achsstabilisierung im Kreuzverbund sind die Federzylinder als Plungerzylinder wirksam, sodass hier der Kolbenstangenquerschnitt als Stützfläche wirkt. Hierdurch ergibt sich beim Federn ein deutlicher Unterschied bei den von den Federspeichern aufzunehmenden und abzugebenen Druckölmengen. Beim Umsteuern von Pendelfunktion in die Stabilisierungsfunktion werden die Zylinder- und Ringräume der Federzylinder einer Achse in Kreuzverbund geschaltet und der Speicher im Ringraumfederkreis als auch Speichervolumen im Zylinderfederkreis weggeschaltet, um einem Absinken der Federrate wegen der reduzierten Druckölmengen entgegenzuwirken. Die weggeschalteten Speicher werden durch das Druckregelventil, das bei Pendelfunktion den Ringraumdruck einregelt, bei jeder Niveaukorrektur auf das für die Umschaltung ausgelegte Druckniveau gehalten, sodass eine automatische Umschaltung der Achsfunktionen erfolgen kann.

Zum Niveauregeln sind jedem Federzylinder ein elektrischer Höhenregler zugeordnet, deren Signale Magnetventile zur Ansteuerung der hydraulischen Regelfunktionen aktivieren. Bei der Pendelfunktion sind beide Höhenregler einer Achse im Verbund geschaltet und bei Stabilisierung wird das Niveau jedes Federzylinders über den zugeordneten Höhenregler getrennt eingeregelt.

Eine zusätzliche Optimierungsmöglichkeit für das Fahrverhalten ist durch Dämpferelemente gegeben, die in der Verbindungsleitung zwischen Zylinderraum und Druckspeicher eingefügt sind.

Das Prinzip der Doppelfunktionsachse bietet zusätzlich den wirtschaftlichen Vorteil, dass baugleiche Achsen für Vorder- und Hinterachse eingesetzt werden können.

### Kurzbeschreibung der Zeichnung

Anhand eines Ausführungsbeispiels wird die Erfindung nachstehend näher erläutert.

Es zeigt:
- Fig. 1: schematisch einen Schaltplan mit der Schaltung für Pendelfunktion,
- Fig. 2: den Schaltplan nach Umschaltung auf Stabilisierungsfunktion,
- Fig. 3: eine Dreipunktlagerung mit einer Hinterachsstabilisierung für die Straßenfahrt,
- Fig. 4: eine Hinterachsstabilisierung mit blockierter Federung für die Feldarbeit,
- Fig. 5: eine Vorderachsstabilisierung bei großen Lasten auf der Vorderachse und
- Fig. 6: eine Vorderachsstabilisierung mit blockierter Federung.

### Ausführung der Erfindung

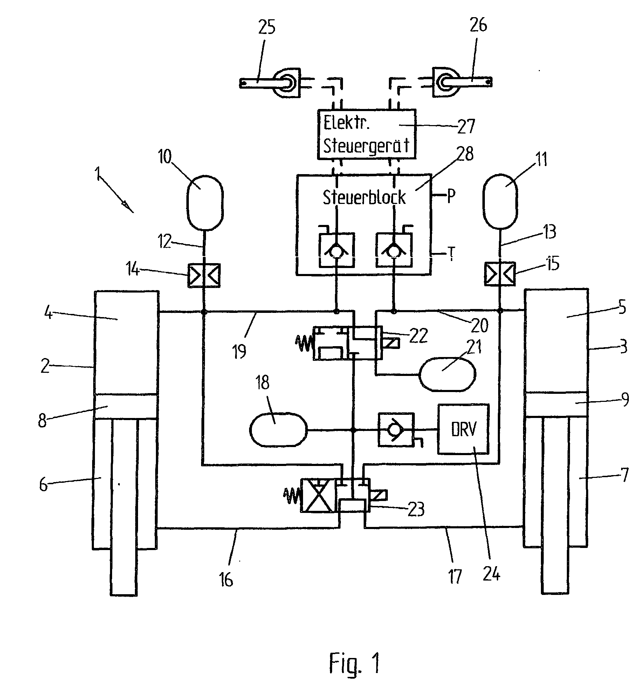

In der Fig. 1 ist das Schaltschema 1 der Doppelfunktionsachse in Pendelfunktion dargestellt. Die doppelt wirkenden hydraulischen Federzylinder 2 und 3 haben die Zylinderräume 4 und 5 die Ringräume 6 und 7. Die Zylinderräume 4 und 5 sind von den Ringräumen 6 und 7 durch die Kolben 8 und 9 getrennt. Die Zylinderräume 4 und 5 sind jeweils mit einem Druckspeicher 10 und 11 über die Leitungen 12 und 13 verbunden. In die Verbindungsleitungen 12 und 13 sind die hydraulischen Dämpferelemente 14 und 15 eingefügt, die eine Dämpfung des Durchflusses der hydraulischen Flüssigkeit ergeben. Die Ringräume 6 und 7 sind über die Leitungen 16 und 17 mit dem Druckspeicher 18 verbunden, während die Zylinderräume 4 und 5 über die Leitungen 19 und 20 an den zusätzlichen Druckspeicher 21 angeschlossen sind. Die Ventile 22 und 23 sind in der eingezeichneten Stellung bestromt und stellen die Verbindung zwischen den Zylinderräumen 4 und 5 und den Druckspeichern 21, 10 und 11 sowie die Verbindung zwischen den Ringräumen 6 und 7 und dem Druckspeicher 18 her. Die Steuerung der Ventile 22 und 23 erfolgt extern über Schalter oder automatisch lastabhängig über Signale von Drucksensoren in den Zylinderräumen 4 und 5, indem vorrangig nur die Achse mit der geringeren Belastung auf Pendelfunktion gemäß Fig.1 geschaltet ist. Das Druckregelventil 24 regelt den bei hohen Lastverhältnissen geforderten Ringraumdruck. Ist das Druckniveau von Zylinder- und Ringraum in etwa ausgeglichen, so kann durch Stromlosschaltung der Magnetventile 22 und 23 eine Umschaltung erfolgen, so dass ein Kreuzverbund zwischen den Zylinderräumen 4 und 5 sowie den Ringräumen 6 und 7 entsteht und damit von der Funktion der Pendelachse in die Funktion der Stabilisierungsachse umgeschaltet wird.

Die allgemeine Niveauregelung der Achsfederung erfolgt in bekannter Weise über elektrische Höhenregler 25 und 26, die an das elektrische Steuergerät 27 angeschlossen sind, welches seinerseits den Steuerblock 28 für die Druckmittelzufuhr beziehungsweise -abfuhr steuert. Die Signale der beiden Höhenregler werden bei Pendelfunktion ohne Berücksichtigung der Pendelbewegung elektronisch zu einem einheitlichen Steuersignal verarbeitet.

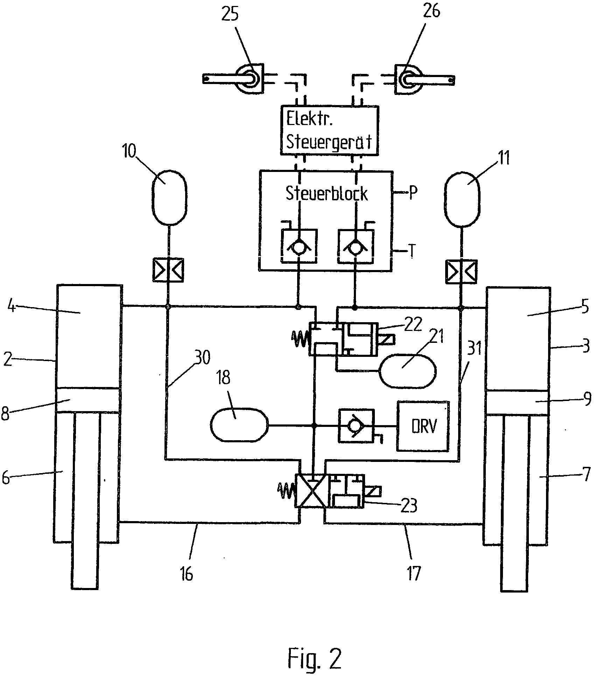

Die Fig. 2 zeigt das Schaltschema der Doppelfunktionsachse in Stabilisierungsfunktion, bei dem die Steuerventile 22 und 23 nicht bestromt sind und zwischen den Zylinderräumen 4 und 5 sowie den Ringräumen 6 und 7 ein Kreuzverbund hergestellt worden ist. Durch das stromlose Ventil 23 ist der Druckspeicher 18 von den Ringräumen 6 und 7 getrennt und die Ringräume über Kreuz mit den Zylinderräumen 4 und 5 verbunden. Das stromlose Magnetventil 22 unterbricht den zylinderseitigen Querverbund, trennt den Speicher 21 ist von dem Zylinderfederkreis und verbindet den Speicher 21 hydraulisch mit dem Druckspeicher 18. Der Zylinderraum 4 ist über die Leitungen 30 und 17 mit dem Ringraum 7 verbunden. Der Zylinderraum 5 seinerseits ist über die Leitungen 31 und 16 mit dem Ringraum 6 verbunden. Der Speicher 10 bildet in Verbindung mit den Federzylinderräumen 4 und 7 den linken Federkreis und der Speicher 11 mit den Federzylinderräumen 5 und 6 den Rechten. Die im Verbund geschalteten Speicher 18 und 21 sind beim Federn im Kreuzverbund unaktiv. Sie werden durch das Druckregelventil bei jeder Niveaukorrektur auf den festgelegten Umschaltdruck eingeregelt beziehungsweise gehalten. Über den Höhenregler 25 wird das Niveau vom linken Federkreis und über den Regler 26 vom rechten Kreis getrennt eingeregelt, sodass Schräglagen statisch ausgeregelt werden. Bei Parallelfederung wirkten die Kolbenstangen der Federzylinder mit ihren Verdrängungsmengen getrennt in gleicher Fließrichtung auf die Speicher 10 und 11. Beim Wanken dagegen werden über den Kreuzverbund die größeren Kolbenverdrängungsmengen in gegensinniger Fließrichtung mit dem stabilisierenden Effekt eines Querstabilisators dadurch wirksam, dass aufgrund der größeren Ölmengen der Federkreis der einfedernden Seite im Vergleich zum Parallelfedern bei geringerem Federweg deutlich höhere Stützkräfte aufnimmt und sich die Stützkraft der ausfedernden Seite stark reduziert.

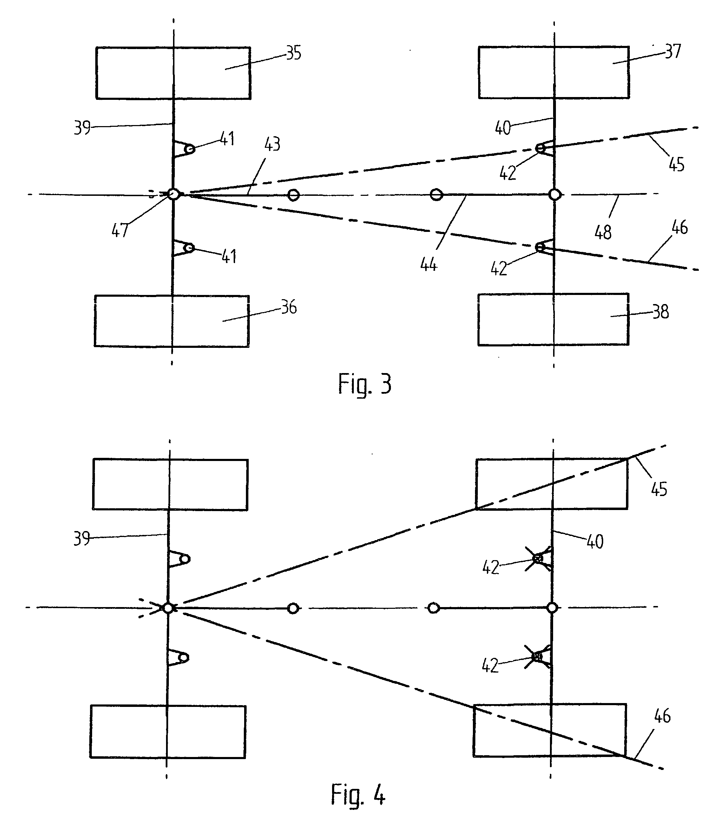

In der Fig. 3 ist schematisch das Dreipunktprinzip des Schlepperaufbaus mit der Vorder- 39 und der Hinterachse 40 dargestellt. Die Vorderräder 35 und 36 und die Hinterräder 37 und 38 sind jeweils durch eine Doppelfunktionsachse 39 und 40 miteinander verbunden. Die Achsen 39 und 40 sind mit den Lagerstützen 41 an der Vorderradachse 39 und den Lagerstützen 42 an der Hinterachse 40 versehen. An diese Stützen 41 und 42 greifen die Kolbenstangen der Federzylinder 2, 3 an. Jede Achse 39, 40 ist außerdem mit den Längslenkern 43 und 44 ausgestattet. Mit den strich-punktierten Linien 45 und 46 ist die Abstützung des gefederten Schlepperaufbaus als Dreipunktabstützung angezeigt. In diesem Ausführungsbeispiel ist die Hinterachse 40 als Stabilisierungsachse gemäß Fig. 2 geschaltet. Die Achslast wird von den an den Anschlägen 42 angreifenden Federzylindern 2, 3 der Hinterradachse 40 federnd gehalten. Die Vorderradachse 39 dagegen ist als Pendelachse geschaltet, so dass sie um den Drehpunkt 47 pendeln kann. Die Federzylinder 2, 3 der Vorderachse 39 greifen an den Punkten 41 an und lassen die Pendelbewegung zu. Bei dieser Schaltung ist der Schlepper für eine Straßenfahrt gut geeignet. Es können aber auch Feldarbeiten mit ihm durchgeführt werden. Der Abstand der jeweiligen Lagerstützen 41 und 42 von der Mittellinie 48 des Traktors ist gleich.

Ist für die Feldarbeit die maximale Wankstabilität einer starren Hinterachse gefordert, so ist für diesen Fall in Fig. 4 die Federung an den Federzylindern 2, 3 blockiert, was zu einer größeren Spreizung der strich-punktierten Linien 45 und 46 und damit einer Verlagerung der Auflagepunkte des Schleppergewichts nach außen führt. Die Blockierung kann durch Wegschalten der Federspeicher oder durch Verfahren der Achse in die Anschläge mit eventuell zusätzlicher Verriegelung erfolgen.

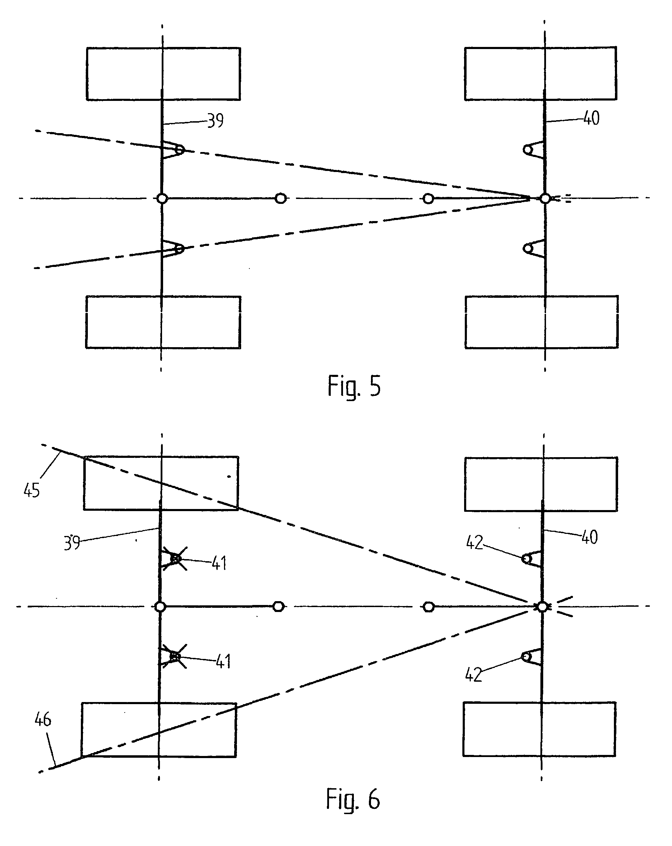

In den Fig. 5 und 6 ist schematisch der Schlepper nach den Fig. 3 und 4 dargestellt, mit dem Unterschied, dass die Hinterachse 40 als Pendelachse und die Vorderachse 39 als Stabilisierungsachse geschaltet ist. Die Schaltung nach Fig. 5 eignet sich besonders für Fahrbetrieb mit einer sehr hohen Belastung an der Vorderachse 39, während die Schaltung nach Fig. 6 die Spreizung der Achslastlinien 45 und 46 zeigt, die dann erreicht wird, wenn die Federung an den Lagerstützen 41 blockiert wird.

## Patentansprüche

1. Hydropneumatische niveaugeregelte Achsfederung für die Vorderrad- und Hinterachse an Fahrzeugen, insbesondere an Fahrzeugen mit großen Achslastspreizungen mit zwei doppelt wirkenden hydraulischen Federzylindern, deren Zylinderräume mit je einem ersten Druckspeicher und deren kolbenstangenseitige Ringräume mit einem zweiten Druckspeicher verbunden sind, **dadurch gekennzeichnet, dass** die Achsfederung für die Vorder- (39) und Hinterachse (40) als umschaltbare Doppelfunktionsachsfederung gebildet ist, so dass jede Achse (39, 40) sowohl als Pendelachse (im Zylinderquerverbund) als auch als Stabilisierungsachse (im Kreuzverbund) einschaltbar ist.

2. Achsfederung nach Anspruch 1, **dadurch gekennzeichnet, dass** beide Achsfederungen der Vorder- und Hinterachse als Stabilisierungsachse schaltbar sind.

3. Achsfederung nach Anspruch 1, **dadurch gekennzeichnet, dass** die Schaltung wechselseitig ist, so dass bei Schaltung einer Achse als Pendelachse die gleichzeitige Schaltung der anderen Achse als Stabilisierungsachse zur Folge hat.

4. Achsfederung nach Anspruch 3, **dadurch gekennzeichnet, dass** bei niedrigerer Achslast auf der Fahrzeugvorderachse die Fahrzeughinterachse als Stabilisierungsachse und die entlastete Fahrzeugvorderachse als Pendelachse und bei niedrigerer Achslast auf der Fahrzeughinterachse diese als Pendelachse und die belastete Fahrzeugvorderachse als Stabilisierungsachse geschaltet ist.

5. Achsfederung nach einem der Ansprüche 1 bis 4, **dadurch gekennzeichnet, dass** die Achsfederung der Stabilisierungsachse durch Wegschalten der Federspeicher blockiert ist.

6. Achsfederung nach einem der Ansprüche 1 bis 5, **dadurch gekennzeichnet, dass** die Zylinderräume (4, 5) der Federzylinder (2, 3) einer Achse (39, 40) jeweils an einem eigenen Druckspeicher (10, 11) anschließbar sind.

7. Achsfederung nach Anspruch 6, **dadurch gekennzeichnet, dass** die Zylinderräume (4, 5) der Federzylinder (2, 3) mit einem zusätzlichen Druckspeicher (21) verbindbar sind.

8. Achsfederung nach Anspruch 6 oder 7, **dadurch gekennzeichnet, dass** die Ringräume (6, 7) der Federzylinder (2, 3) an einem gemeinsamen Druckspeicher (18) anschließbar sind.

9. Achsfederung nach einem der Ansprüche 1 bis 8, **dadurch gekennzeichnet, dass** der Zylinderraum (4, 5) des einen Federzylinders (2, 3) und sein Druckspeicher (10, 11) mit dem Ringraum (7, 6) des anderen Federzylinders (3, 2) verbindbar ist.

10. Achsfederung nach Anspruch 9, **dadurch gekennzeichnet, dass** der Druckspeicher (18) der Ringräume (6, 7) und der zusätzliche Druckspeicher (21) der Zylinderräume (4, 5) abgesperrt sind.

11. Achsfederung nach einem der Ansprüche 1 bis 10, **dadurch gekennzeichnet, dass** in die Verbindungsleitungen (12, 13) zu den Druckspeichern (10, 11) hydraulische Dämpferelemente (14, 15) eingefügt sind.

12. Achsfederung nach einem der Ansprüche 1 bis 11, **dadurch gekennzeichnet, dass** die Umschaltung von Pendelachsfederung auf die Stabilisierungsachsfederung druckabhängig vom Druck in den Zylinderräumen (4, 5) erfolgt.

13. Achsfederung nach einem der Ansprüche 1 bis 12, **dadurch gekennzeichnet, dass** die Umschaltung bei in etwa gleichen Drücken in den Zylinder- (4, 5) und den Ringräumen (6, 7) der Federzylinder (2, 3) erfolgt.

14. Achsfederung nach einem der Ansprüche 1 bis 13, **dadurch gekennzeichnet, dass** der Aufbau der Vorder- und Hinterachsfederung identisch ist.

15. Achsfederung nach einem der Ansprüche 1 bis 14, **dadurch gekennzeichnet, dass** die Achse (39, 40) zwecks Federungsblockierung gegen die Anschläge gedrückt und falls erforderlich zusätzlich fixiert werden kann.

16. Achsfederung nach einem der Ansprüche 1 bis 15, **dadurch gekennzeichnet, dass** die abgesperrten Druckspeicher (18 und 21) über ein Druckregelventil (24) auf das Umsteuerdruckniveau geregelt und gehalten werden.

## Claims

1. Hydropneumatic levelled axle suspension for the front and the rear axle on vehicles, in particular on vehicles with high axle-load spreads, having two double-acting hydraulic spring cylinders, of which the cylinder spaces are connected in each case to a first pressure accumulator and of which the annular spaces located on the piston-rod side are connected to a second pressure accumulator, **characterized in that** the axle suspension for the front axle (39) and rear axle (40) is formed as a reversible double-function axle suspension, so that each axle (39, 40) is connectable both as a floating axle (in a transverse combination of the cylinders) and as a stabilizing axle (in a cross combination).

2. Axle suspension according to Claim 1, **characterized in that** both axle suspensions of the front axle and of the rear axle are connectable as a stabilizing axle.

3. Axle suspension according to Claim 1, **characterized in that** the connection is reciprocal, so that, when one axle is connected as a floating axle, this results in a simultaneous connection of the other axle as a stabilizing axle.

4. Axle suspension according to Claim 3, **characterized in that**, in the case of a low axle load on the vehicle front axle, the vehicle rear axle is connected as a stabilizing axle and the relieved vehicle front axle as a floating axle, and, in the case of a low axle load on the vehicle rear axle, the latter is connected as a floating axle and the loaded vehicle front axle as a stabilizing axle.

5. Axle suspension according to one of Claims 1 to 4, **characterized in that** the axle suspension of the stabilizing axle is blocked as a result of the disconnection of the spring accumulators.

6. Axle suspension according to one of Claims 1 to 5, **characterized in that** the cylinder spaces (4, 5) of the spring cylinders (2, 3) of an axle (39, 40) can be linked in each case to a specific pressure accumulator (10, 11).

7. Axle suspension according to Claim 6, **characterized in that** the cylinder spaces (4, 5) of the spring cylinders (2, 3) can be linked to an additional pressure accumulator (21).

8. Axle suspension according to Claim 6 or 7, **characterized in that** the annular spaces (6, 7) of the spring cylinders (2, 3) can be linked to a common pressure accumulator (18).

9. Axle suspension according to one of Claims 1 to 8, **characterized in that** the cylinder space (4, 5) of one spring cylinder (2, 3) and its pressure accumulator (10, 11) can be linked to the annular space (7, 6) of the other spring cylinder (3, 2).

10. Axle suspension according to Claim 9, **characterized in that** the pressure accumulator (18) of the annular spaces (6, 7) and the additional pressure accumulator (21) of the cylinder spaces (4, 5) are shut off.

11. Axle suspension according to one of Claims 1 to 10, **characterized in that** hydraulic damper elements (14, 15) are inserted into the linking lines (12, 13) to the pressure accumulators (10, 11).

12. Axle suspension according to one of Claims 1 to 11, **characterized in that** the changeover from floating axle suspension to stabilizing axle suspension takes place as a function of the pressure in the cylinder spaces (4, 5).

13. Axle suspension according to one of Claims 1 to 12, **characterized in that** the changeover takes place in the case of approximately equal pressures in the cylinder spaces (4, 5) and the annular spaces (6, 7) of the spring cylinders (2, 3).

14. Axle suspension according to one of Claims 1 to 13, **characterized in that** the construction of the front-axle and the rear-axle suspension is identical.

15. Axle suspension according to one of Claims 1 to 14, **characterized in that**, for the purpose of blocking the suspension, the axle (39, 40) can be pressed against the stops and, if necessary, be additionally fixed.

16. Axle suspension according to one of Claims 1 to 15, **characterized in that** the shut-off pressure accumulators (18 and 21) are regulated to and held at the reversing-pressure level via a pressure-regulating valve (24).

## Revendications

1. Suspension hydropneumatique à réglage d'assiette pour l'essieu avant et l'essieu arrière de véhicules, notamment de véhicules ayant de grands écarts de charge d'essieux, comprenant deux cylindres à ressort hydrauliques à double effet dont les chambres de cylindre sont à chaque fois connectées à un premier accumulateur de pression et dont les chambres annulaires du côté de la tige de piston sont connectées à un deuxième accumulateur de pression, **caractérisée en ce que** la suspension pour l'essieu avant (39) et l'essieu arrière (40) est réalisée sous forme de suspension à double fonction commutable, de sorte que chaque essieu (39, 40) puisse être utilisé à la fois en tant qu'essieu oscillant (en liaison transversale aux cylindres) et qu'en tant qu'essieu stabilisateur (en liaison croisée).

2. Suspension selon la revendication 1, **caractérisée en ce que** les deux suspensions de l'essieu avant et de l'essieu arrière peuvent être montées en tant qu'essieu stabilisateur.

3. Suspension selon la revendication 1, **caractérisée en ce que** le montage est réciproque, de telle sorte que lors du montage d'un essieu en tant qu'essieu oscillant, le montage simultané de l'autre essieu soit en tant qu'essieu stabilisateur.

4. Suspension selon la revendication 3, **caractérisée en ce que** pour une faible charge d'essieu sur l'essieu avant du véhicule, l'essieu arrière du véhicule est monté en tant qu'essieu stabilisateur et l'essieu avant déchargé du véhicule est monté en tant qu'essieu oscillant et pour une faible charge d'essieu sur l'essieu arrière du véhicule, celui-ci est monté en tant qu'essieu oscillant et l'essieu avant sollicité du véhicule est monté en tant qu'essieu stabilisateur.

5. Suspension selon l'une quelconque des revendications 1 à 4, **caractérisée en ce que** la suspension de l'essieu stabilisateur est bloquée par déconnexion du ressort accumulateur.

6. Suspension selon l'une quelconque des revendications 1 à 5, **caractérisée en ce que** les chambres de cylindre (4, 5) des cylindres à ressort (2, 3) d'un essieu (39, 40) peuvent être raccordées à chaque fois à un accumulateur de pression respectif (10, 11).

7. Suspension selon la revendication 6, **caractérisée en ce que** les chambres de cylindre (4, 5) des cylindres à ressort (2, 3) peuvent être connectées à un accumulateur de pression supplémentaire (21).

8. Suspension selon la revendication 6 ou 7, **caractérisée en ce que** les chambres annulaires (6, 7) des cylindres à ressort (2, 3) peuvent être raccordées à un accumulateur de pression commun (18).

9. Suspension selon l'une quelconque des revendications 1 à 8, **caractérisée en ce que** la chambre de cylindre (4, 5) d'un cylindre à ressort (2, 3) et son accumulateur de pression (10, 11) peuvent être connectés à la chambre annulaire (7, 6) de l'autre cylindre à ressort (3, 2).

10. Suspension selon la revendication 9, **caractérisée en ce que** l'accumulateur de pression (18) des chambres annulaires (6, 7) et l'accumulateur de pression supplémentaire (21) des chambres de cylindre (4, 5) sont bloqués.

11. Suspension selon l'une quelconque des revendications 1 à 10, **caractérisée en ce que** l'on introduit dans les lignes de connexion (12, 13) aux accumulateurs de pression (10, 11) des éléments amortisseurs hydrauliques (14, 15).

12. Suspension selon l'une quelconque des revendications 1 à 11, **caractérisée en ce que** le passage de la suspension oscillante à la suspension stabilisatrice s'effectue en fonction de la pression dans les chambres de cylindre (4, 5).

13. Suspension selon l'une quelconque des revendications 1 à 12, **caractérisée en ce que** la conversion s'effectue à des pressions approximativement égales dans les chambres de cylindre (4, 5) et les chambres annulaires (6, 7) des cylindres à ressort (2, 3).

14. Suspension selon l'une quelconque des revendications 1 à 13, **caractérisée en ce que** la structure de la suspension avant et de la suspension arrière est identique.

15. Suspension selon l'une quelconque des revendications 1 à 14, **caractérisée en ce que** l'essieu (39, 40) peut être pressé contre les butées afin de bloquer la suspension et peut si cela est nécessaire être fixé de manière supplémentaire.

16. Suspension selon l'une quelconque des revendications 1 à 15, **caractérisée en ce que** les accumulateurs de pression bloqués (18 et 21) sont régulés et maintenus au niveau de pression d'inversion par le biais d'une soupape de régulation de pression (24).
